# EUROPÄISCHE PATENTSCHRIFT

(11) **EP 2 331 288 B1**
(45) Veröffentlichungstag und Bekanntmachung des Hinweises auf die Patenterteilung: **25.02.2015**
(21) Anmeldenummer: 09748958.7
(22) Anmeldetag: 07.10.2009
(51) Int. Cl.: B23P 15/00, F01D 5/34, F01D 9/04, F01D 5/30

(54) **VERFAHREN ZUM HERSTELLEN EINES ROTORS UND ROTOR**
METHOD FOR PRODUCING A ROTOR AND A ROTOR
PROCÉDÉ DE FABRICATION D'UN ROTOR ET ROTOR

(30) Priorität: 09.10.2008 DE 102008051934
(43) Veröffentlichungstag der Anmeldung: 15.06.2011
(73) Patentinhaber: MTU Aero Engines AG, 80995 München (DE)
(72) Erfinder: SCHMIDT, Robert, 85757 Karlsfeld (DE)
(86) Internationale Anmeldenummer: PCT/DE2009/001388
(87) Internationale Veröffentlichungsnummer: WO 2010/040340

(56) Entgegenhaltungen:
- EP-A- 0 197 268
- WO-A-2009/049596
- CN-A- 101 254 578
- US-A- 2 450 493
- US-A- 3 246 389
- US-A- 4 034 182
- US-A1- 2008 170 939

## Beschreibung

Die Erfindung betrifft ein Verfahren zum Herstellen eines Rotors, insbesondere einer Turbinenscheibe oder eines Turbinenrings für eine Turbinenstufe einer Strömungsmaschine gemäß dem Oberbegriff des Anspruchs 1.

Die Erfindung betrifft weiterhin einen Rotor gemäß dem Oberbegriff des Anspruchs 10, insbesondere eine Turbinenscheibe oder einen Turbinenring für eine Turbinenstufe einer Strömungsmaschine, mit einer Mehrzahl von Rotorschaufeln, die in Form eines Schaufelkranzes angeordnet und zumindest mittelbar mit einer Rotorscheibe oder einem Rotorring verbunden sind.

Ein solches Verfahren bzw. ein solcher Rotor sind aus EP 0 197 268 A1 bekannte.

Derartige Rotoren sind aus dem Stand der Technik bekannt und umfassen üblicherweise eine Mehrzahl von Rotorschaufeln, die in Form eines Schaufelkranzes angeordnet und zumindest mittelbar mit einer Rotorscheibe oder einem Rotorring verbunden sind. Der Rotor kann daher beispielsweise als Turbinenscheibe (Blisk) oder Turbinenring (Bling) für eine Strömungsmaschine ausgebildet sein.

In der Druckschrift EP 0 197 268 A1 wird ein Verfahren zum Herstellen eines Regelrades für den Hochdruckrotor einer Dampfturbine offenbart. In Figur 6 dieser Druckschrift wird gezeigt, dass unterhalb der radial verlaufenden Schweißnähten ein Unterpulververfahren im Rundumauftrag vorgesehen ist.

Ein Hauptproblem bei der Montage oder Reparatur eines derartigen Rotors besteht jedoch darin, dass es beim Fügen der einzelnen Rotorschaufeln aufgrund von Verunreinigungen durch Kühlschmierstoffe (trocken) zu Schweißfehlern und Porenbildungen kommen kann, wodurch erhebliche Mehrkosten entstehen. Eine Bearbeitung ohne Kühlschmierstoffe ist jedoch bei den üblicherweise verwendeten Werkstoffen - beispielsweise Inconel 718 - sehr problematisch.

Aufgabe der vorliegenden Erfindung ist es daher, einen Rotor der eingangs genannten Art zu schaffen, welcher kostengünstiger und prozesssicherer herstellbar bzw. reparierbar ist.

Die Aufgabe wird erfindungsgemäß durch ein Verfahren gemäß Patentanspruch 1 zum Herstellen eines Rotors sowie durch einen Rotor mit den Merkmalen des Patentanspruchs 10 gelöst. Vorteilhafte Ausgestaltungen der Erfindung sind in den jeweiligen Unteransprüchen angegeben, wobei vorteilhafte Ausgestaltungen des Verfahrens - soweit anwendbar-als vorteilhafte Ausgestaltungen des Rotors und umgekehrt anzusehen sind.

Bei einem erfindungsgemäßen Verfahren zum Herstellen eines Rotors, insbesondere einer Turbinenscheibe oder eines Turbinenrings für eine Turbinenstufe einer Strömungsmaschine, werden zumindest die Schritte Ausbilden eines eine Mehrzahl von Rotorschaufeln umfassenden Schaufelkranzes, Verschweißen von im Bereich von Schaufelfüßen der Rotorschaufeln angeordneten Adaptern miteinander, wobei zumindest im Wesentlichen radiale Schweißnähte mit vorbestimmten Einschweißtiefen erzeugt werden, Anordnen einer Rotorscheibe oder eines Rotorrings am Schaufelkranz und Verschweißen der Rotorscheibe oder des Rotorrings mit den Adaptern der Rotorschaufeln, wobei wenigstens eine weitere Schweißnaht erzeugt wird, durchgeführt. Mit anderen Worten werden die Adapter zunächst durch zumindest im Wesentlichen radiale Schweißnähte geheftet und anschließend mit der Rotorscheibe bzw. dem Rotorring verschweißt. Die wenigstens eine weitere Schweißnaht kommt somit nicht in Kontakt mit den eventuellen Verunreinigungen. Hierdurch wird zuverlässig verhindert, dass eventuell vorhandene Verunreinigungen wie Kühlschmierstoffe und dergleichen aufgrund von Zersetzung oder Ausgasen zu unerwünschten Schweißfehlern führen können, so dass der Rotor insgesamt schneller, kostengünstiger und prozesssicherer herstellbar ist. Entsprechendes gilt auch im Fall einer Reparatur des Rotors.

Ferner werden erfindungsgemäß die radialen Schweißnähte mit der wenigstens einen weiteren Schweißnaht überschweißt. Auch hierdurch wird sichergestellt, dass eventuell im Restspalt zwischen den Adaptern und der Rotorscheibe bzw. dem Rotorring vorhandene Verunreinigungen nicht ausgasen können.

Ferner wird erfindungsgemäß die Einschweißtiefen der radialen Schweißnähte derart eingestellt, dass sie mindestens 50% und vorzugsweise mindestens 60% einer Oberraupenbreite der wenigstens einen weiteren Schweißnaht betragen. Auf diese Weise wird eine besonders hohe mechanische Stabilität des Rotors erzielt.

Außerdem wird erfindungsgemäß die Rotorscheibe oder der Rotorring derart mit den Adaptern verschweißt, dass die wenigstens eine weitere Schweißnaht zumindest im Wesentlichen axial und/oder kreisförmig bezüglich einer Drehachse des Rotors und/oder entlang eines Kontaktbereichs zwischen den Adaptern und der Rotorscheibe oder dem Rotorring verläuft. Dies ermöglicht eine besonders zuverlässige und mechanisch stabile Verbindung zwischen dem Schaufelkranz und der Rotorscheibe bzw. dem Rotorring.

In einer vorteilhaften Ausgestaltung der Erfindung ist vorgesehen, dass die Rotorschaufeln zum Ausbilden des Schaufelkranzes, in einer vorbestimmten Aufbauposition des Schaufelkranzes angeordnet werden. Hierdurch kann der Schaufelkranz mit der gewünschten Präzision und Rundlaufeigenschaft ausgebildet werden.

Weitere Vorteile ergeben sich, indem die Rotorschaufeln zunächst an einer Haltevorrichtung lösbar festgelegt und durch Bewegen der Haltevorrichtung in der vorbestimmten Aufbauposition des Schaufelkranzes angeordnet werden. Mit Hilfe einer Haltevorrichtung kann ein verbesserter Schutz der Rotorschaufeln vor unerwünschten Beschädigungen, Verkratzungen und dergleichen erzielt werden, da beim Anordnen keine direkten Krafteinwirkungen auf die Rotorschaufeln auftreten.

Weitere Vorteile ergeben sich, wenn die radialen Schweißnähte mit Einschweißtiefen zwischen 3 mm und 10 mm, insbesondere zwischen 5 mm und 6 mm, erzeugt werden. Durch eine tiefere Einschweißung als notwendig wird besonders zuverlässig verhindert, dass eventuell vorhandene Kühlschmierstoffe bei einer folgenden Bearbeitung in Restspalte eindringen können.

Ferner werden erfindungsgemäß die radialen Schweißnähte mit der wenigstens einen weiteren Schweißnaht überschweißt. Auch hierdurch wird sichergestellt, dass eventuell im Restspalt zwischen den Adaptern und der Rotorscheibe bzw. dem Rotorring vorhandene Verunreinigungen nicht ausgasen können.

Indem in den Rotorschaufeln vor dem Ausbilden des Schaufelkranzes und/oder nach dem Erzeugen der radialen Schweißnähte eine Vorspannung erzeugt wird, wird bei einem späteren Hochlaufen des Rotors - beispielsweise in einer Turbine - zuverlässig verhindert, dass die Rotorschaufeln aneinander schlagen.

Dabei hat es sich als vorteilhaft gezeigt, wenn eine Keildicke der Adapter derart gewählt wird, dass die Vorspannung nach dem Erzeugen der radialen Schweißnähte durch Schrumpfen erzeugt wird. Dies stellt eine konstruktiv einfache und kostengünstige Möglichkeit zum Erzeugen der gewünschten Vorspannung in allen Rotorschaufeln dar. Zudem müssen die einzelnen Rotorschaufeln nicht separat auf einer entsprechenden Haltevorrichtung eingespannt werden, wodurch die Herstellung bzw. Reparatur des Rotors zusätzlich verbilligt und beschleunigt wird.

In einer weiteren vorteilhaften Ausgestaltung der Erfindung ist vorgesehen, dass die Rotorschaufeln um einen Winkel zwischen 0,5° und 5°, insbesondere zwischen 1° und 3° tordiert werden, um ein unerwünschtes Aneinanderschlagen im späteren Betrieb des Rotors zuverlässig zu verhindern.

Indem die radialen Schweißnähte gleichmäßig über einen Innenumfang des Schaufelkranzes verteilt erzeugt werden, wird in weiterer Ausgestaltung der Erfindung eine besonders hohe mechanische Belastbarkeit des Rotors erzielt.

Dabei hat es sich weiterhin als vorteilhaft gezeigt, dass zum Verschweißen ein Elektronenstrahl-Schweißverfahren und/oder ein Laserstrahl-Schweißverfahren verwendet wird. Hierdurch können die Schweißnähte automatisiert, schnell und mit hoher Fertigungspräzision hergestellt werden, wodurch die Herstellungskosten des Rotors weiter sinken.

Ein weiterer Aspekt der Erfindung betrifft einen Rotor, welcher kostengünstiger und prozesssicherer herstellbar bzw. reparierbar ist, indem im Bereich von Schaufelfüßen der Rotorschaufeln Adapter angeordnet sind, die mittels zumindest im Wesentlichen radial verlaufender Schweißnähte mit vorbestimmten Einschweißtiefen miteinander und mittels wenigstens einer weiteren Schweißnaht mit der Rotorscheibe oder dem Rotorring verschweißt sind. Auf diese Weise besitzt der Rotor besonders hochwertige Schweißnähte, da das Auftreten von Schweißfehlern, Porenbildungen und dergleichen zuverlässig verhindert wird. Weitere sich ergebende Vorteile sind den vorhergehenden Beschreibungen zu entnehmen.

Ferner werden erfindungsgemäß die radialen Schweißnähte mit der wenigstens einen weiteren Schweißnaht überschweißt. Auch hierdurch wird sichergestellt, dass eventuell im Restspalt zwischen den Adaptern und der Rotorscheibe bzw. dem Rotorring vorhandene Verunreinigungen nicht ausgasen können.

Ferner wird erfindungsgemäß die Einschweißtiefen der radialen Schweißnähte derart eingestellt, dass sie mindestens 50% und vorzugsweise mindestens 60% einer Oberraupenbreite der wenigstens einen weiteren Schweißnaht betragen. Auf diese Weise wird eine besonders hohe mechanische Stabilität des Rotors erzielt.

Außerdem wird erfindungsgemäß die Rotorscheibe oder der Rotorring derart mit den Adaptern verschweißt, dass die wenigstens eine weitere Schweißnaht zumindest im Wesentlichen axial und/oder kreisförmig bezüglich einer Drehachse des Rotors und/oder entlang eines Kontaktbereichs zwischen den Adaptern und der Rotorscheibe oder dem Rotorring verläuft. Dies ermöglicht eine besonders zuverlässige und mechanisch stabile Verbindung zwischen dem Schaufelkranz und der Rotorscheibe bzw. dem Rotorring.

In einer vorteilhaften Ausgestaltung der Erfindung ist vorgesehen, dass die Einschweißtiefen der radialen Schweißnähte derart eingestellt sind, dass sie mindestens 50% und vorzugsweise mindestens 60% einer Oberraupenbreite der wenigstens einen weiteren Schweißnaht betragen. Auf diese Weise wird eine besonders hohe mechanische Stabilität des Rotors erzielt.

Weitere Vorteile ergeben sich, indem die radialen Schweißnähte Einschweißtiefen zwischen 3 mm und 10 mm, insbesondere zwischen 5 mm und 6 mm, aufweisen. Durch eine tiefere Einschweißung als notwendig wird besonders zuverlässig verhindert, dass eventuell vorhandene Kühlschmierstoffe bei einer folgenden Bearbeitung in Restspalte eindringen können.

Indem die Rotorschaufeln vorgespannt und/oder um einen Winkel zwischen 0,5° und 5°, insbesondere zwischen 1° und 3° tordiert sind, kann ein unerwünschtes Aneinanderschlagen der Rotorschaufeln bei einem späteren Betrieb des Rotors zuverlässig verhindert werden.

Weitere Vorteile, Merkmale und Einzelheiten der Erfindung ergeben sich anhand der nachfolgenden Beschreibung von Ausführungsbeispielen sowie anhand der Zeichnungen, in welchen gleiche oder funktionsgleiche Elemente mit identischen Bezugszeichen versehen sind. Dabei zeigt:
- Fig. 1: eine schematische Seitenansicht eines Ausführungsbeispiels einer Haltevorrichtung, an welcher eine Rotorschaufel festgelegt ist;
- Fig. 2: eine vergrößerte Ansicht des in Fig. 1 gezeigten Details II;
- Fig. 3: eine schematische Perspektivansicht eines Schaufelkranzes;
- Fig. 4: eine vergrößerte Ansicht des in Fig. 3 gezeigten Details IV, wobei mehrere Schweißnähte erkennbar sind; und
- Fig. 5: eine vergrößerte und teilgeschnittene Perspektivansicht des in Fig. 3 gezeigten Details IV.

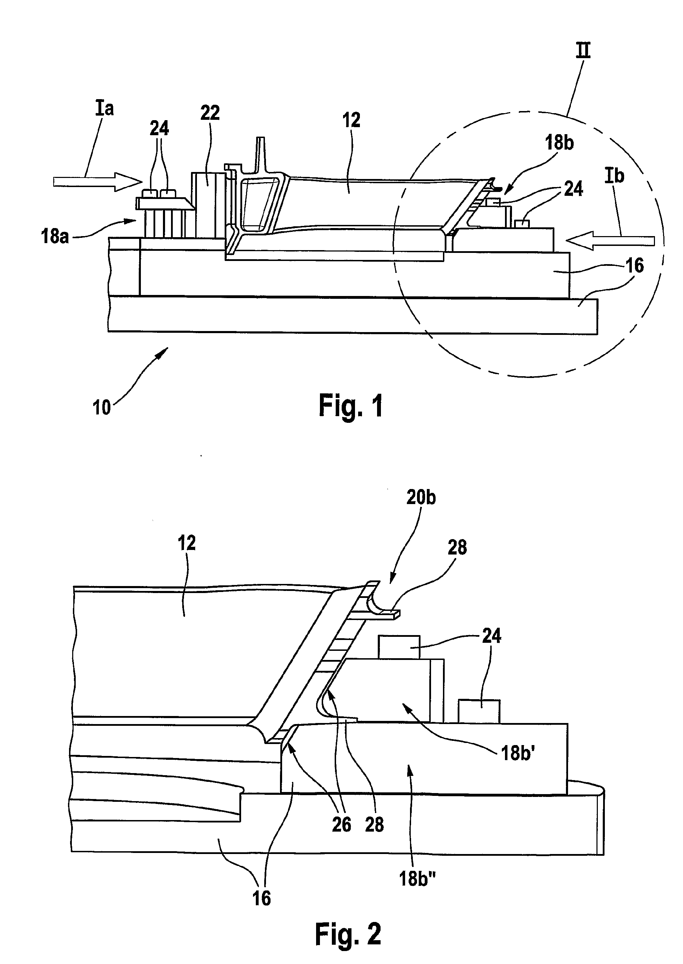

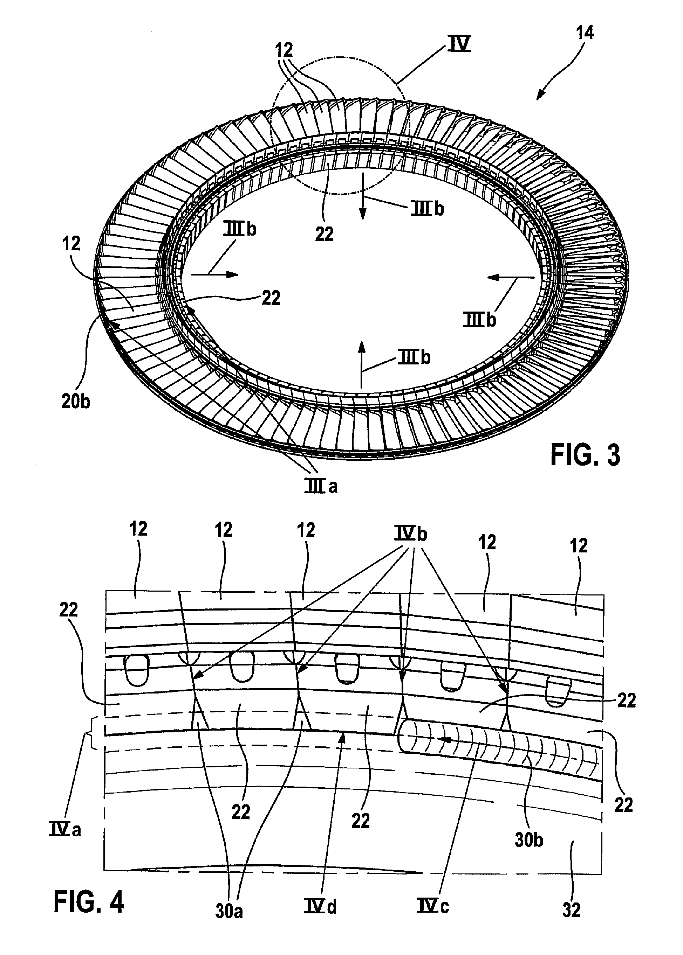

Fig. 1 zeigt eine schematische Seitenansicht eines Ausführungsbeispiels einer Haltevorrichtung 10, an welcher eine Rotorschaufel 12 für einen Schaufelkranz 14 (s. Fig. 3) eines Rotors festgelegt ist. Fig. 1 wird im Folgenden in Zusammenschau mit Fig. 2 erläutert werden, welche eine vergrößerte Ansicht des in Fig. 1 gezeigten Details II zeigt. Die Haltevorrichtung 10 umfasst einen Grundkörper 16 und zwei am Grundkörper 16 angeordnete Halteelemente 18a, 18b, mittels welchen die Rotorschaufel 12 lösbar am Grundkörper 16 festgelegt und eingespannt ist. Das Halteelement 18a ist dabei als Spannschuh und korrespondierend mit dem Profil eines Adapters 22 an der Rotorschaufel 12 ausgebildet, während das Halteelement 18b korrespondierend mit einem Außendeckbandprofil 20b (Z-Profil) der Rotorschaufel 12 ausgebildet ist, so dass bereichsweise ein Formschluss erzielt wird. Weiterhin umfasst das Halteelement 18b zwei Teilhalteelemente 18b', 18b", wobei das Teilhalteelement 18b' zudem als Spannschuh ausgebildet ist. Am Schaufelfuß der Rotorschaufel 12 ist ein Adapter 22 angeordnet, dessen Funktion im Folgenden näher erläutert werden wird. Die Halteelemente 18a, 18b sind ihrerseits mit als Schrauben ausgebildeten Befestigungsmitteln 24 lösbar am Grundkörper 16 festgelegt. Die Halteelemente 18a, 18b sind weiterhin im Kontaktbereich mit der Rotorschaufel 12 mit einer Schutzschicht 26 versehen, um ein Verkratzen oder dergleichen der Rotorschaufel 12 zuverlässig zu vermeiden.

Zum Festlegen der Rotorschaufel 12 an der Haltevorrichtung 10 wird vorzugsweise zunächst das als Spannschuh ausgebildete Teilhalteelement 18b' formschlüssig an einem am Außendeckbandprofil 20b der Rotorschaufel 12 vorgesehenen Dichtfin 28 (Fin-Dichtlippe, Dichtsteg) befestigt. Danach wird die Rotorschaufel 12 gegenüber der Haltevorrichtung 10 positioniert und durch Verschrauben der Teilhalteelemente 18b', 18b" festgelegt. Anschließend wird die Rotorschaufel 12 mit Hilfe des am Adapter 22 angeordneten und festgeschraubten Halteelements 18a eingespannt. Ein Nachrichten der Rotorschaufel 12 in radialer Richtung des Schaufelkranzes 14 kann - beispielsweise durch leichte Schläge - zur Sicherstellung des Rundlaufs gemäß den Pfeilen Ia, Ib über den Adapter 22 oder die Halteelemente 18a, 18b erfolgen. Da keine direkte Krafteinwirkung auf die festgelegte Rotorschaufel 12 erfolgt, wird die Rotorschaufel 12 über die Haltevorrichtung 10 bewegt, wobei ein Verrutschen, Beschädigen oder Abplatzen einer eventuell vorhandenen Funktionsschicht der Rotorschaufel 12 zuverlässig verhindert wird. Dabei kann vorgesehen sein, dass die Rotorschaufeln 12 zum Aufbau des gesamten Schaufelkranzes 14 auf einer entsprechend ausgebildeten Montagevorrichtung (nicht gezeigt) angeordnet werden und die Haltevorrichtung 10 bzw. ihr Grundkörper 16 entlang einer korrespondierenden Schiebeführung der Montagevorrichtung bewegbar ist.

Die Halteelemente 18a, 18b sind dabei im vorliegenden Ausführungsbeispiel derart ausgebildet, dass beim Festlegen der Rotorschaufel 12 am Grundkörper 16 eine Vorspannung (Pre-Twist) in der Rotorschaufel 12 erzeugt wird, indem die Rotorschaufel um einen Winkel zwischen 0,5° und 5°, beispielsweise zwischen 1° und 3°, tordiert wird. Dabei ist vorgesehen, dass die Halteelemente 18a, 18b geometrisch derart ausgelegt sind, dass sich die Vorspannung beim Festlegen der Rotorschaufel 12 am Grundkörper 16 ergibt. Durch Austausch bzw. Variieren der Halteelemente 18a, 18b kann der gewünschte Pre-Twist daher in Abhängigkeit der jeweiligen konstruktiven Anforderungen an den Schaufelkranz 14 variabel erzeugt werden.

Fig. 3 zeigt eine schematische Perspektivansicht des Schaufelkranzes 14, welcher durch Bewegen von insgesamt 99 Rotorschaufeln 12 in ihre jeweils vorbestimmten Aufbaupositionen ausgebildet ist. Der gesamte Aufbaudurchmesser des Schaufelkranzes 14 kann beispielsweise mit Hilfe einer Messuhr geprüft und gegebenenfalls nachgerichtet werden, um den Rundlauf sicherzustellen. Mit Pfeil IIIa ist dabei der Pre-Twist zwischen dem Adapter 22 und dem Außendeckbandprofil 20b (Z-Profil) der Rotorschaufel 12 gekennzeichnet. Da die Rotorschaufeln 12 durch das Verschweißen nur im Bereich ihrer Adapter 22 schrumpfen, ihre Außendeckprofile 20b jedoch keiner Schrumpfung unterliegen, entsteht die gewünschte Vorspannung. Diese Vorspannung kann gezielt durch Vorhalten der Keildicke der Adapter 22 eingestellt werden, wodurch der mit Hilfe der Haltevorrichtung 10 erzeugte Pre-Twist grundsätzlich entfallen oder reduziert werden kann. Die Pfeile IIIb kennzeichnen zur Verdeutlichung einen Schrumpf des Schaufelkranzes 14 von vorliegend etwa 2 mm. Dabei ist zu betonen, dass grundsätzlich auf die vorstehend erläuterte Haltevorrichtung 10 bzw. auf das Erzeugen eines Pre-Twists mit Hilfe der Haltevorrichtung 10 verzichtet werden kann, da die Vorspannung der Rotorschaufeln 12 auch ausschließlich mit Hilfe des Schweißschrumpfes erzeugt werden kann. Dies hat zudem den Vorteil, dass die Herstellung bzw. Reparatur des Rotors beschleunigt und verbilligt wird, da die Vorspannung gemeinsam in allen Rotorschaufeln 12 erzielt wird, und die Rotorschaufeln 12 nicht einzeln eingespannt und vermessen werden müssen. Dabei kann grundsätzlich vorgesehen sein, dass das Außenkonturprofil 20b der Rotorschaufeln 12 derart ausgebildet bzw. angepasst wird, dass das Erzeugen der Vorspannung entsprechend gefördert wird.

Fig. 4 zeigt eine vergrößerte Ansicht des in Fig. 3 gezeigten Details IV. Dabei sind mehrere Rotorschaufeln 12 und Adapter 22 des in Fig. 3 gezeigten Schaufelkranzes 14 erkennbar, die mit Hilfe eines Elektronenstrahlschweißverfahrens unter Ausbildung mehrerer Schweißnähte 30a, 30b verschweißt werden. Dabei ist mit IVa ein Bereich ohne Verunreinigungen durch mechanische Bearbeitung, Reinigungsmittelrückstände oder dergleichen gekennzeichnet. Die Pfeile IVb markieren demgegenüber Bereiche, die derartige Verunreinigungen aufweisen und dadurch zur Ausbildung eines Restspaltes führen können. Insbesondere bei Verwendung von hochtemperaturfähigen Materialien - beispielsweise Inconel 718 - für die Rotorschaufeln 12 bzw. die Adapter 22 ist eine Bearbeitung des Schaufelkranzes 14 ohne Kühlschmierstoffe (trocken) sehr problematisch. Daher werden zunächst die Adapter 22 aneinandergeheftet, indem radiale Schweißnähte 30a erzeugt werde, die eine Tiefe von wenigstens 60% einer Oberraupenbreite der axialen Schweißnaht 30b aufweisen. Die radialen Schweißnähte 30a werden dabei gleichmäßig über einen Innenumfang des Schaufelkranzes 14 verteilt erzeugt. Im vorliegenden Ausführungsbeispiel wird dabei eine Einschweißtiefe von etwa 5-6 mm erzeugt. Durch eine tiefere Einschweißung als notwendig wird verhindert, dass ein zu tiefes Eindringen eventuell vorhandener Kühlschmierstoffe bei der mechanischen Bearbeitung in den Restspalt erfolgen kann. Dabei kann - wie zuvor erwähnt - vorgesehen sein, dass ein größerer Schweißschrumpf akzeptiert wird, um einen gezielten Pre-Twist in den Rotorschaufeln 12 zu erzeugen.

Anschließend wird eine Rotorscheibe 32 am Schaufelkranz 14 angeordnet und mit den Adaptern 22 verschweißt, um einen als Turbinenscheibe (Blisk) ausgebildeten Rotor herzustellen. Hierzu werden die radialen Schweißnähte 30a gemäß Pfeil IVc überschweißt und die axiale Schweißnaht 30b erzeugt. Die axiale Schweißnaht 30b, die kreisförmig bezüglich einer Drehachse des Schaufelkranzes 14 bzw. des Rotors und entlang eines Kontaktbereichs zwischen den Adaptern 22 und der Rotorscheibe 32 verläuft, kommt auf diese Weise im mit Pfeil IVd markierten Bereich nicht mit den eventuell vorhandenen Verunreinigungen in Berührung, wodurch eine Poren- oder Fehlstellenbildung ausgeschlossen und eine entsprechende hohe Fügequalität sichergestellt ist. Zum Verschweißen wird dabei jeweils ein Elektronenstrahl-Schweißverfahren verwendet, wobei grundsätzlich auch LaserstrahlSchweißverfahren oder dergleichen vorgesehen sein können.

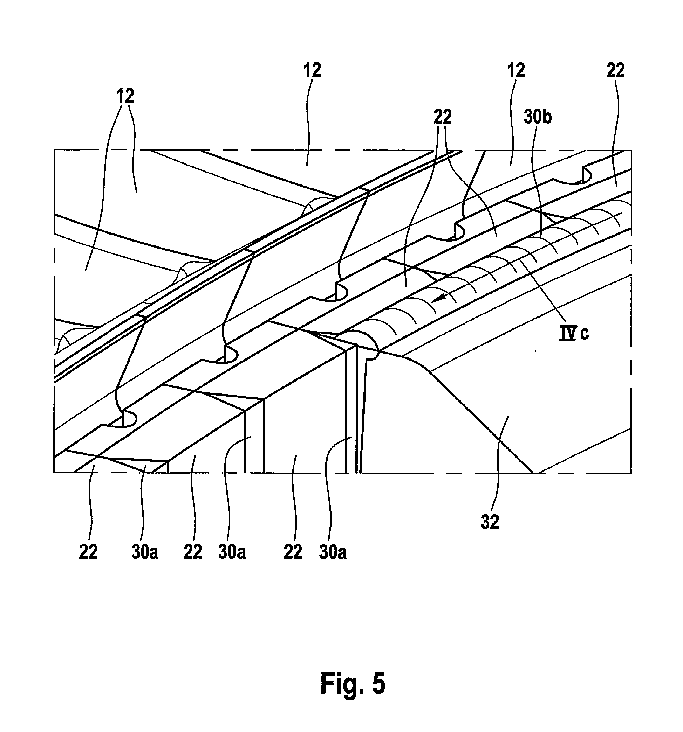

Zum besseren Verständnis zeigt Fig. 5 eine vergrößerte und teilgeschnittene Perspektivansicht des in Fig. 3 gezeigten Details IV. Dabei sind insbesondere die radialen Schweißnähte 30a zwischen den Adaptern 22 und die axiale Schweißnaht 30b zwischen den Adaptern 22 und der Rotorscheibe 32 erkennbar. Die genannten Verfahrensschritte können grundsätzlich natürlich nicht nur bei der Herstellung, sondern auch bei einer Reparatur des Schaufelkranzes 14 bzw. des Rotors angewendet werden.

## Patentansprüche

1. Verfahren zum Herstellen eines Rotors, für eine Turbinenstufe einer Strömungsmaschine, folgende Schritte umfassend:
- Ausbilden eines eine Mehrzahl von Rotorschaufeln (12) umfassenden Schaufelkranzes (14);
- Verschweißen von im Bereich von Schaufelfüßen der Rotorschaufeln (12) angeordneten Adaptern (22) miteinander, wobei zumindest im Wesentlichen radiale Schweißnähte (30a) mit vorbestimmten Einschweißtiefen erzeugt werden; Anordnen einer Rotorscheibe (32) oder eines Rotorrings am Schaufelkranz (14); und
- Verschweißen der Rotorscheibe (32) oder des Rotorrings mit den Adaptern (22) der Rotorschaufeln (12), wobei wenigstens eine weitere Schweißnaht (30b) erzeugt wird, **dadurch gekennzeichnet, dass** die Einschweißtiefen der radialen Schweißnähte (30a) derart eingestellt wird, dass sie mindestens 50% und vorzugsweise mindestens 60% einer Oberraupenbreite der wenigstens einen weiteren Schweißnaht (30b) betragen, wobei die radialen Schweißnähte (30a) mit der wenigstens einen weiteren Schweißnaht (30b) überschweißt werden die Rotorscheibe (32) oder der Rotorring derart mit den Adaptern (22) verschweißt wird, dass die wenigstens eine weitere Schweißnaht (30b) zumindest im Wesentlichen axial und/oder kreisförmig bezüglich einer Drehachse des Rotors und/oder entlang eines Kontaktbereichs zwischen den Adaptern (22) und der Rotorscheibe (32) oder dem Rotorring verläuft.

2. Verfahren nach Anspruch 1, **dadurch gekennzeichnet, dass** die Rotorschaufeln (12) zum Ausbilden des Schaufelkranzes, (14) in einer vorbestimmten Aufbauposition des Schaufelkranzes (14) angeordnet werden.

3. Verfahren nach Anspruch 1 oder 2, **dadurch gekennzeichnet, dass** die Rotorschaufeln (12) zunächst an einer Haltevorrichtung (10) lösbar festgelegt und durch Bewegen der Haltevorrichtung (10) in der vorbestimmten Aufbauposition des Schaufelkranzes (14) angeordnet werden.

4. Verfahren nach einem der Ansprüche 1 bis 3, **dadurch gekennzeichnet, dass** die radialen Schweißnähte (30a) mit Einschweißtiefen zwischen 3 mm und 10 mm, insbesondere zwischen 5 mm und 6 mm, erzeugt werden.

5. Verfahren nach einem der Ansprüche 1 bis 4, **dadurch gekennzeichnet, dass** in den Rotorschaufeln (12) vor dem Ausbilden des Schaufelkranzes, (14) und/oder nach dem Erzeugen der radialen Schweißnähte (30a) eine Vorspannung erzeugt wird.

6. Verfahren nach Anspruch 5, **dadurch gekennzeichnet, dass** eine Keildicke der Adapter (22) derart gewählt wird, dass die Vorspannung nach dem Erzeugen der radialen Schweißnähte (30a) durch Schrumpfen erzeugt wird.

7. Verfahren nach Anspruch 5 oder 6, **dadurch gekennzeichnet, dass** die Rotorschaufeln (12) um einen Winkel zwischen 0,5° und 5°, insbesondere zwischen 1° und 3° tordiert werden.

8. Verfahren nach einem der Ansprüche 1 bis 7, **dadurch gekennzeichnet, dass** die radialen Schweißnähte (30a) gleichmäßig über einen Innenumfang des Schaufelkranzes (14) verteilt erzeugt werden.

9. Verfahren nach einem der Ansprüche 1 bis 8, **dadurch gekennzeichnet, dass** zum Verschweißen ein Elektronenstrahl-Schweißverfahren und/oder ein Laserstrahl-Schweißverfahren verwendet wird.

10. Rotor, insbesondere Turbinenscheibe oder Turbinenring für eine Turbinenstufe einer Strömungsmaschine, mit einer Mehrzahl von Rotorschaufeln (12), die in Form eines Schaufelkranzes, (14) angeordnet und zumindest mittelbar mit einer Rotorscheibe (32) oder einem Rotorring verbunden sind, wobei im Bereich von Schaufelfüßen der Rotorschaufeln (12) Adapter (22) angeordnet sind, die mittels zumindest im Wesentlichen radial verlaufender Schweißnähte (30a) mit vorbestimmten Einschweißtiefen miteinander und mittels wenigstens einer weiteren Schweißnaht (30b) mit der Rotorscheibe (32) oder dem Rotorring verschweißt sind, **dadurch gekennzeichnet, dass** die Einschweißtiefen der radialen Schweißnähte (30a) derart eingestellt sind, dass sie mindestens 50% und vorzugsweise mindestens 60% einer Oberraupenbreite der wenigstens einen weiteren Schweißnaht (30b) betragen, wobei die radialen Schweißnähte (30a) mit der wenigstens einen weiteren Schweißnaht (30b) überschweißt sind und die Rotorscheibe (32) oder der Rotorring derart mit den Adaptern (22) verschweißt wird, dass die wenigstens eine weitere Schweißnaht (30b) zumindest im Wesentlichen axial und/oder kreisförmig bezüglich einer Drehachse des Rotors und/oder entlang eines Kontaktbereichs zwischen den Adaptern (22) und der Rotorscheibe (32) oder dem Rotorring verläuft.

11. Rotor nach Anspruch 10, **dadurch gekennzeichnet, dass** die radialen Schweißnähte (30a) Einschweißtiefen zwischen 3 mm und 10 mm, insbesondere zwischen 5 mm und 6mm aufweisen.

12. Rotor nach einem der Ansprüche 10 bis 11, **dadurch gekennzeichnet, dass** die Rotorschaufeln (12) vorgespannt und/oder um einen Winkel zwischen 0,5° und 5°, insbesondere zwischen 1° und 3° tordiert sind.

## Claims

1. A method for producing a rotor for a turbine stage of a continuous-flow machine, comprising the following steps:
- configuration of a blade ring (14) comprising a plurality of rotor blades (12);
- welding together of adapters (22) that are arranged in the region of blade roots of the rotor blades (12), wherein at least substantially radial weld seams (30a) with predetermined welding depths are generated;
- arrangement of a rotor disk (32) or a rotor ring at the blade ring (14); and
- welding of the rotor disk (32) or the rotor ring to the adapters (22) of the rotor blades (12), wherein at least one further weld seam (30b) is generated, **characterised in that** the welding depths of the radial weld seams (30a) are set in such a way that they amount to at least 50% and preferably at least 60% of an upper bead width of the at least one further weld seam (30b), wherein the radial weld seams (30a) are welded over with the at least one further weld seam (30b); the rotor disk (32) or the rotor ring is welded to the adapters (22) in such a way that the at least one further weld seam (30b) extends at least substantially axially and/or circularly with respect to a rotational axis of the rotor and/or along a contact region between the adapters (22) and the rotor disk (32) or the rotor ring.

2. A method according to claim 1, **characterised in that** in order to configure the blade ring (14) the rotor blades (12) are arranged in a predetermined installation position of the blade ring (14).

3. A method according to claim 1 or 2, **characterised in that** the rotor blades (12) are in the first instance detachably fixed to a holding device (10) and by means of movement of the holding device (10) are arranged in the predetermined installation position of the blade ring (14).

4. A method according to one of claims 1 to 3, **characterised in that** the radial weld seams (30a) are generated with welding depths between 3 mm and 10 mm, in particular between 5 mm and 6 mm.

5. A method according to one of claims 1 to 4, **characterised in that** a pre-tension is generated in the rotor blades (12) before the configuration of the blade ring (14) and/or after the generation of the radial weld seams (30a).

6. A method according to claim 5, **characterised in that** a wedge thickness of the adapters (22) is selected in such a way that the pre-tension is generated by shrinkage after the generation of the radial weld seams (30a).

7. A method according to claim 5 or 6, **characterised in that** the rotor blades (12) are twisted about an angle between 0.5° and 5°, in particular between 1° and 3°.

8. A method according to one of claims 1 to 7, **characterised in that** the radial weld seams (30a) are generated so as to be distributed uniformly over an inner circumference of the blade ring (14).

9. A method according to one of claims 1 to 8, **characterised in that** an electron-beam welding method and/or a laser-beam welding method is used for the welding.

10. A rotor, in particular a turbine disk or turbine ring for a turbine stage of a continuous-flow machine, having a plurality of rotor blades (12) which are arranged in the form of a blade ring (14) and are connected at least indirectly to a rotor disk (32) or a rotor ring, wherein arranged in the region of blade roots of the rotor blades (12) there are adapters (22) which are welded together by means of at least substantially radially extending weld seams (30a) with predetermined welding depths and to the rotor disk (32) or the rotor ring by means of at least one further weld seam (30b), **characterised in that** the welding depths of the radial weld seams (30a) are set in such a way that they amount to at least 50% and preferably at least 60% of an upper bead width of the at least one further weld seam (30b), wherein the radial weld seams (30a) are welded over with the at least one further weld seam (30b), and the rotor disk (32) or the rotor ring is welded to the adapters (22) in such a way that the at least one further weld seam (30b) extends at least substantially axially and/or circularly with respect to a rotational axis of the rotor and/or along a contact region between the adapters (22) and the rotor disk (32) or the rotor ring.

11. A rotor according to claim 10, **characterised in that** the radial weld seams (30a) have welding depths between 3 mm and 10 mm, in particular between 5 mm and 6 mm.

12. A rotor according to one of the claims 10 to 11, **characterised in that** the rotor blades (12) are pretensioned and/or twisted about an angle between 0.5° and 5°, in particular between 1° and 3°.

## Revendications

1. Procédé servant à fabriquer un rotor, pour un étage de turbine d'une turbomachine, lequel comprend les étapes qui suivent consistant à :
- réaliser une couronne d'aubes (14) comprenant une pluralité d'aubes de rotor (12) ;
- souder les uns aux autres des adaptateurs (22) disposés dans la zone de pieds d'aube des aubes de rotor (12), au moins des cordons de soudure essentiellement radiaux (30a) étant produits avec une profondeur de soudage prédéterminée ;
- disposer un disque de rotor (32) ou une bague de rotor au niveau de la couronne d'aubes (14) ;
et
- souder le disque de rotor (32) ou la bague de rotor aux adaptateurs (22) des aubes de rotor (12), au moins un autre cordon de soudure (30b) étant produit, **caractérisé en ce que** la profondeur de soudage des cordons de soudure radiaux (30a) est réglée de manière à représenter au moins 50 % et de préférence au moins 60 % d'une largeur de chenille supérieure de l'autre au moins un cordon de soudure (30b), les cordons de soudure radiaux (30a) étant rechargés par soudure avec l'autre au moins un cordon de soudure (30b), le disque de rotor (32) ou la bague de rotor étant soudés de telle manière aux adaptateurs (22) que l'autre au moins un cordon de soudure (30b) s'étend au moins essentiellement de manière axiale et/ou de manière à présenter une forme circulaire par rapport à un axe de rotation du rotor et/ou le long d'une zone de contact entre l'adaptateur (22) et le disque de rotor (32) ou la bague de rotor.

2. Procédé selon la revendication 1, **caractérisé en ce que** les aubes de rotor (12) sont disposées de manière à réaliser la couronne d'aubes (14) dans une position de montage prédéterminée de la couronne d'aubes (14).

3. Procédé selon la revendication 1 ou 2, **caractérisé en ce que** les aubes de rotor (12) sont fixées dans un premier temps de manière amovible au niveau d'un dispositif de maintien (10) et sont disposées par le déplacement du dispositif de maintien (10) dans la position de montage prédéterminé de la couronne d'aubes (14).

4. Procédé selon l'une quelconque des revendications 1 à 3, **caractérisé en ce que** les cordons de soudure radiaux (30a) sont produits avec des profondeurs de soudage comprises entre 3 mm et 10 mm, en particulier entre 5 mm et 6 mm.

5. Procédé selon l'une quelconque des revendications 1 à 4, **caractérisé en ce qu'**une précontrainte est produite dans les aubes de rotor (12) avant la réalisation de la couronne d'aubes (14) et/ou après la production des cordons de soudure radiaux (30a).

6. Procédé selon la revendication 5, **caractérisé en ce qu'**une épaisseur de coin des adaptateurs (22) est choisie de telle manière que la précontrainte est produite par rétrécissement après la production des cordons de soudure radiaux (30a).

7. Procédé selon la revendication 5 ou 6, **caractérisé en ce que** les aubes de rotor (12) sont tordues selon un angle compris entre 0,5° et 5°, en particulier entre 1° et 3°.

8. Procédé selon l'une quelconque des revendications 1 à 7, **caractérisé en ce que** les cordons de soudure radiaux (30a) sont produits selon une répartition homogène sur une périphérie intérieure de la couronne d'aubes (14).

9. Procédé selon l'une quelconque des revendications 1 à 8, **caractérisé en ce qu'**un procédé de soudage par rayonnement électronique et/ou un procédé de soudage par rayonnement laser sont utilisés aux fins du soudage.

10. Rotor, en particulier disque de turbine ou bague de turbine pour un étage de turbine d'une turbomachine, comprenant une pluralité d'aubes de rotor (12), qui sont disposées sous la forme d'une couronne d'aubes (14) et qui sont reliées au moins indirectement à un disque de rotor (32) ou à une bague de rotor, des adaptateurs (22) étant disposés dans la zone des pieds d'aube des aubes de rotor (12), lesquels adaptateurs sont soudés au moyen d'au moins des cordons de soudure (30a) s'étendant essentiellement de manière radiale les uns aux autres avec des profondeurs de soudage prédéterminées et sont soudés au moyen d'au moins un autre cordon de soudure (30b) au disque de rotor (32) ou à la bague de rotor, **caractérisé en ce que** les profondeurs de soudage des cordons de soudure radiaux (30a) sont réglées de manière à représenter au moins 50 % et de préférence au moins 60 % d'une largeur de chenille supérieure de l'autre au moins un cordon de soudure (30b), les cordons de soudure radiaux (30a) étant rechargés par soudage avec l'autre au moins un cordon de soudure (3Cb) et le disque de rotor (32) ou la bague de rotor étant soudés de telle manière aux adaptateurs (22) que l'autre au moins un cordon de soudure (30b) s'étend au moins essentiellement de manière axiale et/ou de manière à présenter une forme circulaire par rapport à un axe de rotation du rotor et/ou le long d'une zone de contact entre les adaptateurs (22) et le disque de rotor (32) ou la bague de rotor.

11. Rotor selon la revendication 10, **caractérisé en ce que** les cordons de soudure radiaux (30a) présentent des profondeurs de soudage comprises entre 3 mm et 10 mm, en particulier entre 5 mm et 6 mm.

12. Rotor selon l'une quelconque des revendications 10 à 11, **caractérisé en ce que** les aubes de rotor (12) sont tordues de manière précontrainte et/ou selon un angle compris entre 0,5° et 5°, en particulier entre 1° et 3°.
